# NEUE EUROPÄISCHE PATENTSCHRIFT

(11) **EP 1 365 642 B2**
(45) Veröffentlichungstag und Bekanntmachung des Hinweises auf die Entscheidung über den Einspruch: **30.06.2010**
(45) Hinweis auf die Patenterteilung: 02.02.2005
(21) Anmeldenummer: 02701299.6
(22) Anmeldetag: 28.02.2002
(51) Int. Cl.: A01J 5/007

(54) **AUTOMATISCHE MELKVORRICHTUNG MIT STEUERBARER STIMULATIONSVORRICHTUNG UND SYSTEM ZUR STIMULATION**
AUTOMATIC MILKING DEVICE COMPRISING A CONTROLLED STIMULATION DEVICE AND SYSTEM FOR STIMULATION
MACHINE A TRAIRE AUTOMATIQUE A DISPOSITIF DE STIMULATION REGLABLE, ET SYSTEME DE STIMULATION

(30) Priorität: 05.03.2001 DE 10110473
(43) Veröffentlichungstag der Anmeldung: 03.12.2003
(73) Patentinhaber: Maier, Jakob, Jun., 86842 Türkheim (DE)
(72) Erfinder: Maier, Jakob, Jun., 86842 Türkheim (DE)
(74) Vertreter: Grünecker, Kinkeldey, Stockmair & Schwanhäusser Anwaltssozietät
(86) Internationale Anmeldenummer: PCT/EP2002/002200
(87) Internationale Veröffentlichungsnummer: WO 2002/069696

(56) Entgegenhaltungen:
- EP-A- 0 189 954
- EP-A- 0 951 820
- EP-A- 0 954 962
- DD-A- 150 837
- DE-A- 1 214 036
- DE-A- 19 926 957
- US-A- 4 790 261
- US-A- 4 941 433
- US-A- 5 218 924
- US-A- 5 769 024

## Beschreibung

Die vorliegende Erfindung betrifft eine automatische Melkvorrichtung gemäß dem Oberbegriff des Ansprüchs 1. Eine derartige Vorrichtung ist aus der GP 0951220 A2 bekannt.

Automatische Melkvorrichtungen der eingangs genannten Art werden heutzutage überwiegend in milchproduzierenden Agrarbetrieben verwendet Der zunehmende wirtschaftliche Druck, der durch gleichbleibende bzw. unter Umständen sogar sinkende Agrarpreise für Milch und Milchprodukte hervorgerufen wird, erfordert eine optimale Nutzung der milcherzeugenden Tiere bei minimalen Betriebskosten des Agrarbetriebs. Wie jedoch jüngste Entwicklungen auf dem Sektor der Nutztierhaltung deutlich zeigen, ist neben einer optimalen technischen Ausgestaltung der Agrarbetriebe sowie der entsprechenden Zulieferbetriebe in gleicher Weise eine möglichst artgetreue und eine für das Tier ein hohes Maß an Wohlbefinden und Gesundheit sichernde Tierhaltung erforderlich.

Insbesondere soll der Melkvorgang zum einen möglichst für den Landwirt zeiteffizient und andererseits für das Tier in möglichst angenehmer und artgetreuer Weise erfolgen, so dass trotz der maschinellen Bearbeitung ein dauerhaft hoher Ertrag gewährleistet ist. Beim Melken von Kühen ist es bekanntermaßen erforderlich, zunächst eine Stimulation am Euter des Tieres auszuführen, um das Tier auf den bevorstehenden Melkvorgang einzustimmen und eine Entleerung der Alveolen, die die milchproduzierenden Zellen beherbergen, in die Zisteme ("Einschießen" der Milch) zu gewährleisten. Nur durch regelmäßiges vollständiges Entleeren der milchproduzierenden Zellen wird die Kuh zu einer dauernden Erzeugung einer großen Menge von Milch, die der physiologischen Eigenart des Tieres und der Qualität des Futters entspricht, angeregt. Da bei automatischen Melkanlagen der eingangs genannten Art die Melkbecher mittels Vakuum an der Zitze haften, ist es für einen optimalen Melkvorgang erforderlich, dass bis zum Zeitpunkt des Einschießens der Milch noch keine Milch abgesaugt wird, da sonst bei geleertem Euterviertel der im Milchleiter herrschende Unterdruck zu einer Kontraktion und dauerhaften Verkrampfung der betreffenden Muskeln führen würde. Vielfach wird daher vor dem Anlegen der Melkbecher der automatischen Anlage eine sogenannte Handstimulation durchgeführt, um den oben beschriebenen physiologischen Vorgang in Gang zu setzen. In der Regel ist jedoch mindestens eine Zeitdauer von etwa 1 Minute erforderlich, um das für diesen physiologischen Vorgang notwendige Hormon freizusetzen. Aus zeitlichen Gründen kann daher insbesondere bei größeren Tierbeständen die notwendige Handstimulation nicht durchgeführt werden, und es ist daher in der Melkanlage eine Stimulationsvorrichtung vorgesehen, um entsprechende mechanische Reize auf das Tier auszuüben. Dabei werden in einer Melkanlage nach dem Stand der Technik die von einem sogenannten Pulsator erzeugten Druckschwankungen, mit denen periodisch der Bereich zwischen dem Zitzengummi und dem Melkbecher beaufschlagt wird, verwendet, um mittels eines entsprechend gestalteten längenveränderlichen Pulsatorschlauchs im Wesentlichen vertikale Schwingungen des Melkgeschirrs zu bewirken. Damit besteht jedoch die Gefahr, dass der Melkbecher an der Zitze "hochklettert", wodurch als Folge eine Einschnürung und damit eine Reduzierung des Milchflusses auftreten kann. Die Amplitude der Schwingung sowie die Intensität des ausgeübten mechanischen Reizes ist dabei von dem Gewicht des Sammelstücks abhängig, das mittels der Pulsatorschläuche sowie flexibler Milchschläuche mit den Melkbechem verbunden ist. Ferner ist systembedingt die Frequenz der ausgeübten mechanischen Stimulation durch die festgelegte Pulsatorfrequenz, die bei üblichen Anlangen etwa 57 bis 62 Hertz beträgt, konstant.

Um jedoch eine verbesserte und gegebenenfalls eine individuell einstellbare Stimulation des Tieres zu erreichen, ist es daher eine Aufgabe der vorliegenden Erfindung, eine automatische Melkanlage mit einer verbesserten Stimulationsvorrichtung bereitzustellen. Ferner ist es eine Aufgabe der vorliegenden Erfindung, ein System zur umfassenden und individuellen Stimulation für ein Milchertragstier bereitzustellen.

Angesichts der zuvor erwähnten Problematik stellt die vorliegende Erfindung eine automatische Melkvorrichtung der eingangs genannten Art bereit, die sich durch die Merkmale des kennzeichnenden Anspruchs auszeichnet.

Erfindungsgemäß kann durch die steuerbare Stimulationsvorrichtung eine Stimulation erreicht werden, die unabhängig vom Melkvorgang und beispielsweise in einem bestimmten Frequenzbereich wählbar ist. Insbesondere ist dadurch die Häufigkeit der ausgeübten Stimulationsreize unabhängig von der Pulsatorfrequenz der Melkanlage, wodurch eine Anpassung an individuelle Erfordernisse einzelner Tiere möglich ist. Femer erlaubt es die erfindungsgemäße Melkanlage, die verwendete Stimulationsfrequenz während des Melkvorgangs zu ändem. insbesondere kann es vorteilhaft sein, die Häufigkeit der ausgeübten Stimulationsreize den unterschiedlichen Phasen des Melkvorgangs anzupassen. Dabei kann es beispielsweise von Vorteil sein, die Frequenz der ausgeübten Stimulationsreize während des Nachmelkens zu erhöhen, um damit ein vollständiges Entleeren der Euterviertel zu erreichen. Femer kann die Stimulierung für jedes Euterviertel separat steuerbar erfolgen, so dass insbesondere in Verbindung mit einer entsprechenden Milchflussmessapparatur für jedes Euterviertel die Stimulierung entsprechend dem jeweiligen Ausmelkungsgrad eines Euterviertels angepasst werden kann.

In einer weiteren Ausführungsform kann die steuerbare Stimulationsvorrichtung eine in Frequenz und/oder Amplitude steuerbare Stimulationsreize erzeugen.

Aufgrund der erfindungsgemäßen Stimulationsvorrichtung kann die Frequenz und/oder die Amplitude, d.h., die Intensität, beispielsweise mechanischer Stimulationsreize, entsprechend eingestellt werden, wodurch insbesondere in Kombination der Ertrag sowie der Gesundheitszustand der zu melkenden Tiere verbessert werden kann.

In einer weiteren Ausführungsform umfasst die steuerbare Stimulationsvorrichtung eine flexible, teilweise längenvariable Fluidverbindung zwischen der Vakuumvorrichtung und jeweils den Melkbechern und ein steuerbares Ventilelement, so dass bei Ansteuerung des Ventilelements durch Druckänderung eine Längenänderung der längenvariablen Fluidverbindung erfolgt.

Durch diese Ausführungsform lassen sich in einfacher Weise Druckschwankungen, die mittels der längenvariablen Fluidverbindung, beispielsweise in Form eines flexiblen Schlauchs mit einer teilweise balgähnlichen Struktur als mechanische Reize auf die Zitze bzw, das Euter des Tieres übertragen.

In einer weiteren Ausbildung ist das steuerbare Ventilelement ein elektromagnetisches Ventilelement. Entsprechende elektromagnetische Ventilelemente lassen sich in einfacher Weise ansteuern, sind mechanisch stabil und von geringer Baugröße, so dass ein entsprechendes Ventilelement sowohl unmittelbar an der längenvariablen Fluidverbindung als auch als stationäres Element an der Vakuumvorrichtung vorgesehen sein kann.

In einer weiteren Ausgestaltung ist das steuerbare Ventilelement ein pneumatisches Ventilelement. Die Verwendung eines pneumatischen Ventilelements erlaubt das Vorsehen des Ventilelements unmittelbar an der längenvariablen Fluidverbindung, wobei keinerlei elektrische Zuleitungen notwendig sind.

In einer weiteren Ausführungsform ist das steuerbare Ventilelement, zumindest bereichsweise, kontinuierlich steuerbar, so dass eine Frequenz und/oder eine maximale Auslenkung der Längenänderung, zumindest teilweise, kontinuierlich verstellbar ist.

Diese Ausführungsform erlaubt in einfacher Weise sowohl die Frequenz als auch die Amplitude einer mechanischen Stimulationswirkung an der Zitze einzustellen. So kann beispielsweise durch ein proportionales Stellventil die längenvariable Fluidverbindung periodisch mit Druckschwankungen beaufschlagt werden, wobei die Frequenz sowie die Größe der Druckdifferenz durch den veränderlichen Stellweg des Proportionalventils einstellbar sind.

In einer weiteren Ausführungsform umfasst die steuerbare Stimulationsvorrichtung eine mittels Druckänderung längenveränderbare Fluidverbindung zwischen zwei oder mehreren der Melkbecher, sowie ein steuerbares Ventilelement, wobei zumindest ein Anschluss des Ventilelements zur Verbindung mit der Vakuumvorrichtung vorgesehen ist.

Mittels dieser Ausführungsform lassen sich zwei oder mehrere Melkbecher direkt durch eine längenveränderbare Fluidleitung, beispielsweise einen Schlauch mit einer balgähnlichen Struktur, untereinander mechanisch koppeln, so dass durch das steuerbare Ventilelement mechanische Schwingungen der Melkbecher mit einer großen horizontalen Komponente erreicht werden können. Insbesondere erlaubt diese Ausführungsform in Kombination mit im Wesentlichen vertikal ausgeführten Stimulationsschwingungen eine größere und daher abwechselungsreichere Bandbreite der Stimulation des Tieres.

In einer weiteren Ausführungsform umfasst die Stimulationsvorrichtung ein Schwingungserzeugungselement, das mit jeweils einem und/oder mit mehreren Melkbechern mechanisch koppelbar ist.

Durch die Verwendung eines Schwingungserzeugungselements lassen sich viele Arten mechanischer Schwingungen erzeugen, so dass wesentlich höhere Frequenzen, als dies mit steuerbaren Ventileinrichtungen möglich ist, erreichbar sind. Insbesondere wenn ein Schwingungserzeugungselement für jeweils einen Melkbecher vorgesehen ist, lassen sich die Melkbecher unabhängig voneinander in Schwingung versetzen. Eine derartige Anordnung ist neben der individuellen Stimulierung der einzelnen Zitzen in Systemen, in denen das Melkgeschirr manuell angelegt wird, auch besonders vorteilhaft in Verbindung mit vollständig automatisierten Melksystemen, sogenannten Melkrobotem, in denen die einzelnen Melkbecher mechanisch unabhängig voneinander und automatisch verfahren werden. In derartigen Melkrobotem ist daher eine "kollektive" Stimulierung der Zitzen nur unter großem Aufwand durchführbar.

In der erfindungsgemäßen Ausgestaltung ist das Schwingerzeugungselement mittels Fluidverbindungsleitungen mit jeweils einem und/ oder mit mehreren Melkbechem koppelbar.

Die Erfindung erlaubt es in einfacher Weise, bereits bestehende Elemente einer automatischen Melkanlage (mit manuellem Anlegen des Melkgeschirrs), beispielsweise Milchschläuche oder Pulsatorschläuche mit einem erfindungsgemäßen Schwingungserzeugungselement zu versehen, und damit die davon erzeugten mechanischen Schwingungen mittels der Verbindungsschläuche auf die Melkbecher zu übertragen. Ferner kann durch flexible Verbindungselemente zusätzlich oder ausschließlich die mechanische Schwingung des Schwingungserzeugungselements in effizienter Weise übertragen werden, wobei entsprechend flexible Verbindungselemente als Massenprodukte verfügbar und daher kostengünstig beziehbar sind.

In einer weiteren Ausgestaltung weist das Schwingungserzeugungselement ein elektromagnetisches und/oder ein piezoelektrisches und/oder ein hydraulisches Schwingungselement auf.

Insbesondere die Verwendung von elektromagnetischen und/oder piezoelektrischen Schwingungselementen erlaubt dabei die Erzeugung von mechanischen Schwingungen in einem weiten Frequenzbereich bei sehr kleinem Bauvolumen des entsprechenden Elements.

In einer weiteren Ausführungsform weist jeder Melkbecher einen Zitzengummi auf, der so gestaltet ist, um mit der steuerbaren Stimulationsvorrichtung koppelbar zu sein und mechanische Schwingungen auf die Zitze übertragen zu können.

Ein entsprechend gestalteter Zitzengummi weist den Vorteil auf, dass entsprechend erzeugte mechanische Schwingungen bzw. Stimulationsreize direkt auf die Zitze übertragen werden. Ferner eröffnet ein derart gestalteter Zitzengummi die Möglichkeit, ein entsprechend kleines Schwingungselement, beispielsweise ein piezoelektrisches Schwingungselement, aufzunehmen, um damit lokal einen Bereich der Zitze zu stimulieren.

In einer weiteren Ausführungsform umfasst der Zitzengummi einen Zwischenbereich zwischen der inneren, teilweise mit der Zitze in Kontakt kommenden Oberfläche und der inneren Oberfläche des Melkbechers, wobei der Zwischenbereich mit einer verformbaren Masse zumindest teilweise gefüllt ist.

Diese Art der Ausgestaltung des Zitzengummis erlaubt es, die für eine passgenaue Form und zur einfachen Reinigung notwendige glatte innere Oberfläche bereitzustellen, wobei gleichzeitig die verformbare Masse eine durch Bewegung bzw. durch die Stimulationsvorrichtung hergerufene Verschiebung einen massierenden Effekt auf die Zitze ausübt. Vorteilhafterweise ist dabei ein Bereich des Zitzengummis, der zur Beendigung der Saugphase von der Außenseite her mit Druck beaufschlagt wird, nicht mit einem entsprechenden Zwischenbereich versehen, so dass das Zusammenfalten des Zitzengummis nicht nachteilig beeinflusst wird.

In einer weiteren Ausführungsform umfasst die verformbare Masse eine Mischung aus Öl und Wasser und/oder ein Gel und/oder Materiatstückchen mit Abmessungen im Bereich von ca. 0,5 mm bis 5 mm.

Das Vorsehen einer verformbaren Masse in der oben dargestellten Art bewirkt einen für das Tier angenehmen massierenden Effekt und fördert somit die stimulierende Wirkung vor, während und nach dem Melkvorgang.

In einer weiteren Ausgestaltung umfasst der Zwischenbereich einen durch eine Membran nach innen abgeschlossenen Fluidanschluss.

Mittels dieses Fluidanschlusses lässt sich die verformbare Masse mit Druck bzw. Druckschwankungen, beispielsweise von der Stimulationsvorrichtung erzeugt, beaufschlagen, um damit veränderbare Massagereize auf das Tier auszuüben. Diese Art der massierenden Wirkung kann insbesondere bei der anfänglichen Stimulation vor dem eigentlichen Melken sowie in der Phase des Nachmelkens zur deutlichen Verstärkung der Stimulationswirkung beitragen.

In einer weiteren Ausgestaltung ist die Membran undurchlässig und elastisch, so dass anschiussseitige Druckschwankungen auf die verformbare Masse ohne Eindringen eines Fluids übertragen werden.

Dadurch ist es in einfacher Weise möglich, durch die steuerbare Stimulationsvorrichtung hervorgerufene Luftdruckschwankungen auf die verformbare Masse und damit in effizienter Weise auf die Zitze zu übertragen.

In einer weiteren Ausgestaltung weist die Membran eine Maschenstruktur auf, mit einer Maschengröße, die kleiner als 0,5 mm ist.

Eine auf diese Weise ausgebildete Membran erlaubt es, wenn die verformbare Masse aus Materialstücken besteht, die größer als 0,5 mm sind, ein Fluid, beispielsweise Wasser oder Luft, durch den Zwischenbereich zu leiten, um damit einen intensiven Massageeffekt zu bewirken.

In einer weiteren Ausführungsform sind der Zitzengummi, der Zwischenbereich, die Membran und der Fluidanschluss als integrales Element ausgeführt.

Diese Ausführungsform erlaubt es, in einfacher Weise einen herkömmlichen Zitzengummi durch den erfindungsgemäßen Zitzengummi zu ersetzen, wobei dieser durch die integrale Bauweise kostengünstig als Massenprodukt herstellbar ist. Des Weiteren erlaubt ein zusätzlicher Anschluss oder eine entsprechende Ausgestaltung des Fluidanschlusses, dass unterschiedliche Füllungen als die verformbare Masse in Zwischenbereich eingefüllt werden können.

In einer weiteren Ausführungsform umfasst der Zwischenbereich ein oder mehrere Abschnitte, der bzw. die durch Einführen eines Fluids im Volumen veränderbar sind.

Die Ausbildung eines oder mehrerer entsprechender Abschnitte ist vorteilhaft, um lokal bestimmte Bereiche der Zitze zu stimulieren, wenn durch eine Volumenvergrößerung ein entsprechender Abschnitt des Zitzengummis aufgrund des Gegendrucks vom Melkbecher eine verstärkte Kraft auf die Zitze ausübt. Diese Art der Stimulation erlaubt eine weiter optimierte Anpassung des Melkvorgangs an den natürlichen Saugvorgang des Kalbs. So kann damit die durch die Lippen des Kalbes am oberen Bereich der Zitze hervorgerufene Stimulation durch entsprechende Volumenänderung des oberen Bereichs des Zitzengummis nachgeahmt werden. Vorzugsweise werden dazu experimentell gewonnene Daten verwendet, so dass ein entsprechender Stimulationsablauf durch eine manuelle Eingabe oder automatisch durchgeführt wird. Ein entsprechender Stimulationsablauf kann vorteilhafterweise in der oben bezeichneten Kontrolleinrichtung implementiert sein.

In einer weiteren Ausführungsform umfasst die Stimulationsvorrichtung eine Heizeinrichtung, die ausgebildet ist, Temperaturen im Bereich von 20 bis 45°C am Zitzengummi zu erzeugen.

Durch die Heizeinrichtung wird es ermöglicht, eine dem natürlichen Saugvorgang des Kalbes nachempfundene Temperatur, die bei etwa 35°C liegt, bereits beim Anlegen der Melkbecher bereitzustellen, so dass sich dadurch eine zusätzliche, das Tier auf den bevorstehenden Melkvorgang vorbereitende Stimulation ergibt.

In einer weiteren Ausgestaltung umfasst die Heizeinrichtung ein elektrisches Heizelement. Dadurch ist eine einfache und gezielte Erwärmung gewünschter Bereiche des Zitzengummis möglich, insbesondere wenn das elektrische Heizelement an der Innenseite des Melkbechers vorgesehen ist.

In einer weiteren Ausgestaltung ist die Heizeinrichtung so ausgebildet, um von einem temperierten Fluid durchströmt zu werden. Insbesondere wenn die Heizeinrichtung Strömungskanäle im Zitzengummi aufweist, kann zusätzlich zur temperaturinduzierten Stimulation eine weitergehende stimulierende Wirkung durch das strömende Fluid, beispielsweise Wasser, erreicht werden.

In einer weiteren Ausführungsform umfasst die Melkanlage eine Kontrolleinheit, die die Stimulationsvorrichtung entsprechend einem in der Kontrolleinheit implementierten Funktionsablauf steuert.

Mittels der erfindungsgemäßen Kontrolleinheit kann ein geeigneter Stimulationsvorgang bzw. Ablauf in automatisierter Weise erfolgen.

In einer weiteren Ausführungsform ist ein Zeitgeber vorgesehen, so dass die Kontrolleinheit die Stimulationsvorrichtung in Abhängigkeit von der Melkdauer steuern kann.

Diese Ausführungsform erlaubt es insbesondere, beispielsweise eine für die ausreichende Stimulation des Tieres notwendige Zeit vor dem eigentlichen Melkvorgang einzuhalten, so dass ein optimaler Ertrag bei jedem Melkvorgang erreicht werden kann.

In einer weiteren Variation ist ein Milchflusssensor vorgesehen, so dass die Kontrolleinheit die Stimulationsvorrichtung in Abhängigkeit von der bereits gemolkenen Milchmenge und/oder dem aktuellen Milchdurchfluss steuem kann.

Durch diese Maßnahme lässt sich eine optimale Anpassung des Stimulationsvorganges an den stattfindenden Melkvorgang erreichen. Insbesondere kann bei Absinken des Milchflusses die Frequenz und/oder die Intensität der Stimulation variiert werden, um somit ein optimales Ausmelken des Euters zu gewährleisten. Dabei kann der Milchflusssensor so ausgebildet sein, dass der Milchfluss jeder einzelnen Zitze detektiert wird, wodurch jede Zitze einzeln entsprechend dem ermittelten Milchfluss aus dem jeweiligen Euterviertel stimuliert werden kann.

In einer weiteren Ausführungsform ist ein Temperatursensor und ein Regelkreis vorgesehen, so dass die Temperatur im Melkbecher regelbar ist. Damit lässt sich unter anderem die Temperatur des Melkbechers auch in der Phase aufrechterhalten, in der in herkömmlichen Anlagen beim Wechseln des Melkgeschirrs eine deutliche Temperaturminderung auftritt.

In einer weiteren Ausgestaltung ist der Regelkreis in der Kontrolleinheit implementiert, so dass eine temperaturabhängige Stimulationssteuerung in den Funktionsablauf der Kontrolleinheit integrierbar ist. Auf diese Weise lässt sich in einfacher Weise erreichen, dass sich auch die Temperatur an der Zitze als ein entsprechender Stimulationsreiz einsetzen lässt. Insbesondere kann in Kombination mit einer eine Massagewirkung hervorrufenden Einrichtung eine Temperatur, die höher als durch die körpereigene Erwärmung des Zitzengummis in herkömmlichen Anlagen erreichbare Temperatur liegt, zur deutlichen Verbesserung der Durchblutung des Zitzengewebes beitragen.

In einer weiteren Ausführungsform umfasst die Kontrolleinheit ein Dateneingabebereich, über den manuell und/oder automatisch Daten, insbesondere das zu melkende Tier betreffende Daten, eingegeben werden können.

Durch den erfindungsgemäßen Dateneingabebereich ist es möglich, Daten einzugeben, die den Stimulationsvorgang entsprechend steuem. Dadurch kann ein für jedes Tier individuell einstellbarer Funktionsablauf gewählt und ausgeführt werden.

In einer weiteren Ausführungsform umfasst die Kontrolleinheit einen Speicherbereich, in dem den Melkvorgang betreffende Daten und insbesondere die Stimulation betreffende Parameter speicherbar sind.

Diese Ausführungsform erlaubt es, beispielsweise für ein bestimmtes Tier verwendete Parameter, die den Stimulationsvorgang betreffen, zu speichern, und bei einem erneuten Melkvorgang wieder abzurufen. Ferner können, falls entsprechende Sensoren vorgesehen werden, Daten wie etwa die Milchmenge bzw, die Durchflussrate aufgezeichnet werden. Insbesondere kann die Kontrolleinheit im Speicherbereich ein Optimierungsprogramm enthalten, das über einen längeren Zeitraum hinweg die Effizienz gewisser Stimulationsparameter, etwa Frequenz und Amplitude mechanischer Stimulationsreize, in Abhängigkeit von der gewonnenen Milchmenge aufzeichnet. Die somit ermittelten optimalen Parameter können dann als Standardwerte für ein oder mehrere Tiere verwendet werden.

Gemäß einem weiteren Aspekt der vorliegenden Erfindung umfasst eine automatische Melkvorrichtung mehrere Melkbechern, ein mit den Melkbechem in Fluidverbindung stehendes Sammelstück, eine einen zum Melken erforderlichen Unterdruck erzeugenden Vakuumvorrichtung, eine mit dem Sammelstück in Fluidverbindung stehende Pulsatoreinrichtung mit Pulsatorschläuchen zur Verbindung zwischen dem Sammelstück und den Melkbechem und eine Stimulationsvorrichtung, wobei sich die Melkanlage dadurch auszeichnet, dass die Pulsatorschläuche einen längenvariablen Bereich aufweisen, der in Betriebsstellung des Sammelstücks horizontal an das Sammelstück gekoppelt ist.

Diese Ausführungsform erzeugt in einfacher Weise eine große horizontale Schwingungskomponente, die zur intensiven Schwingung und damit Stimulation des Euters führt. Vorteilhafterweise kann diese Ausführungsform mit den Ausführungsformen, wie sie im ersten Aspekt der vorliegenden Erfindung beschrieben wurden, kombiniert werden.

Gemäß einem weiteren Aspekt der vorliegenden Erfindung wird ein System zur Stimulation eines Milchertragstieres bereitgestellt, wobei das System eine Stimulationseinrichtung zur physischen Stimulation und eine Stimulationseinrichtung zur optisch und/oder akustischen Stimulation umfasst.

Wie eingangs bereits erwähnt wurde, spielt eine optimale Stimulation des Tieres eine wesentliche Rolle für den Erhalt eines hohen Ertrags sowie einer dauerhaften Gesundheit des Tieres. Daher ist es wichtig, neben physischen Reizen, die im Wesentlichen auf die Zitzen und das Euter des Tieres beschränkt sind, andere Arten der Stimulationsreize, insbesondere optische und akustische Stimulationsreize auf das Tier vor und während des Melkvorgangs auszuüben. So wirkt sich beispielsweise eine geeignete akustische Reizeinwirkung vor und während des Melkvorgangs deutlich förderlich auf die erzielte Milchmenge aus.

In einer weiteren Ausführungsform umfasst die optisch/akustische Stimulationseinrichtung eine Kopfabdeckung mit integrierter Lautsprechereinrichtung, die mit einer geeigneten Schallquelle verbindbar ist.

Diese Ausführungsform erlaubt eine individuelle Gestaltung der akustischen Reize für das zu melkende Tier, die im Wesentlichen von dem bleibenden Schallpegel im Stall unbeeinflusst ist.

In einer weiteren Variation umfasst die optisch/akustische Stimulationseinrichtung eine Vorrichtung zum Aussenden optischer Signale. Insbesondere, wenn die Einrichtung zur Aussendung optischer Signale in einer Kopfabdeckung integriert ist, die ein individuelles Empfangen der optischen Signale, beispielsweise von farbigem Licht und dergleichen, erlaubt, kann das zu melkende Tier wirkungsvoll gegenüber anderen optischen Einflüssen geschützt werden.

In einer weiteren Ausführungsform umfasst das System eine Steuereinheit, die die Stimulationseinrichtung zur physischen Stimulation und die Stimulationseinrichtung zur optisch/akustischen Stimulation steuert. Durch die erfindungsgemäße Steuereinrichtung kann eine geeignete Auswahl an entsprechenden Stemulationsreizen ausgewählt und in zeitlich optimaler Reihenfolge bereitgestellt werden. Femer ist es durch die Steuereinrichtung möglich, automatisch oder manuell steuerbar bei Bedarf in den Stimulationsvorgang einzugreifen.

In einer weiteren Ausführungsform ist eine Kommunikationseinheit zur drahtlosen Kommunikation mit einem peripheren Gerät vorgesehen ist. Diese Ausführungsform ist besonders vorteilhaft in Verbindung mit einer integrierten Stromversorgung, da somit keinerlei Zuleitungsdrähte erforderlich sind, wobei beispielsweise mittels eines optischen, akustischen oder elektromagnetischen Signals ein Stimulationsreiz ausgelöst werden kann. Wenn insbesondere die Stimulationsvorrichtung über eine entsprechende elektronische Schaltung verfügt, kann ein Datenaustausch zwischen der Stimulationsvorrichtung und beispielsweise einer zentralen Rechneranlage erfolgen. So kann beispielsweise die Stimulationsvorrichtung ein Identifikationssignal zur zentralen Rechnereinheit senden und diese aufgrund der erhaltenen Identität kann ihrerseits ein geeignetes Stimulationsprogramm wählen und entsprechende Instruktionen an die Stimulationsvorrichtung senden. Des Weiteren kann der Stimulationsvorgang zu einem bestimmen vorgewählten Zeitpunkt eingeleitet werden, wobei der Zeitpunkt von einer externen Rechnereinheit oder auch von einem in der Stimulationsvorrichtung vorgesehenen Zeitgeber festgelegt wird.

Weitere Aufgaben, Aspekte und Vorteile sowie Ausführungsformen werden aus der nachfolgenden detaillierten Beschreibung sowie den angefügten Patentansprüchen ersichtlich. Im Folgenden werden beispielhafte Ausführungsformen detailliert mit Bezug zu den begleitenden Zeichnungen beschrieben; es zeigen:
- Fig. 1: schematisch eine Melkanlage nach dem Stand der Technik mit einem längenvariablen Pulsatorschlauch, der ein im wesentliches horizontales Schwingen des Euters bewirkt;
- Fig. 2: schematisch eine Ausführungsform eines Melkgeschirrs mit einer steuerbaren Stimulationsvorrichtung;
- Fig. 3: schematisch eine weitere Ausführungsform gemäß der vorliegenden Erfindung, wobei zwei oder mehr Melkbecher eines Melkgeschirrs direkt miteinander mechanisch gekoppelt sind;
- Fig. 3a: schematisch ein Mittel zur mechanischen Verstärkung eines flexiblen längenvariablen Bereichs, der in den mit Bezug zu den Fig. 1 bis 3 beschriebenen Ausführungsformen verwendbar ist.
- Fig. 4: schematisch eine Querschnittsansicht eines Melkbechers mit gefülltem Zwischenbereich zur Massage einer Zitze;
- Fig. 5: schematisch einen Querschnitt eines Melkbechers mit gefülltem Zwischenbereich sowie daran befestigten Schwingungselement; und
- Fig. 6: schematisch ein System zur Stimulation eines Tieres, wobei eine drahtlose Kommunikation mit einer zentralen Rechenanlage erfolgt.

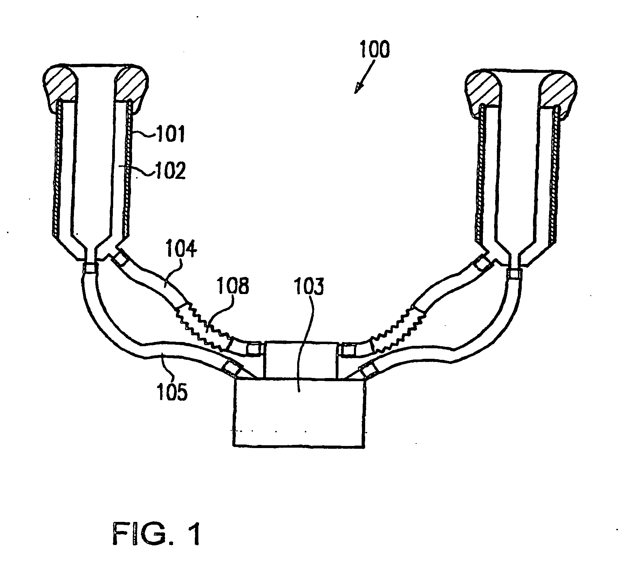

Fig. 1 zeigt eine schematische Querschnittsansicht eines Teils eines Melkgeschirrs 100 einer automatischen Melkanlage (nicht gezeigt), wobei der Einfachheit halber lediglich zwei Melkbecher 101 dargestellt sind. In der Zeichnung ist lediglich nur eine Hälfte mit Bezugszeichen belegt, da die beiden Melkbecher mit zugehörigen Anschlüssen identisch aufgebaut sind. Der Melkbecher 101 ist in seinem Inneren mit einem flexiblen Zitzengummi 102 ausgestattet, der in dieser und den folgenden Zeichnungen nur schematisch dargestellt ist Der Fachmann weiß, dass der Zitzengummi 102 am oberen Bereich strukturiert ist, so dass eine gute Dichtigkeit gegenüber der Zitze erreicht wird. Der Zwischenraum zwischen dem Melkbecher 101 und dem Zitzengummi 102 bildet eine mit Vakuum und Druck abwechselnd zu beaufschlagende Kammer und ist mittels eines flexiblen Pulsatorschlauchs 104 mit einem Sammelstück 103 verbunden. Der Pulsator sowie die dazu gehörige Verbindungsleitung zum Sammelstück 103 ist der Einfachheit halber nicht gezeigt Der Innenraum des Zitzengummis 102 ist mit einem flexiblen Milchschlauch 105 ebenfalls mit dem Sammelstück 103 verbunden. Femer ist eine Stimulationsvorrichtung vorgesehen, die in dem dargestellten Beispiel aus einem längenvariablen Bereich 208 am Pulsatorschlauch 104 besteht, wobei der längenvariable Bereich 108 im wesentlichen horizontal an dem Sammelstück befestigt ist Hierbei beschreibt der Begriff horizontal die Richtung in der Betriebsstellung des Melkgeschirrs 100. Femer ist eine Vakuumvorrichtung vorgesehen (nicht gezeigt), die mit dem Sammelstück 103 in Fluidverbindung steht.

Im Betrieb liefert der Pulsator periodisch Unterdruck und Atmosphärendruck an das Sammelstück 103, das wiederum den Unter-/Atmosphärendruck über die Pulsatorschläuche 105 auf den Zwischenraum zwischen dem Melkbecher 101 und dem Zitzengummi 102 überträgt Durch diese Druckschwankungen erfolgt eine Längenkontraktion des längenvariablen Bereichs 108 des Pulsatorschlauchs 104. Durch die horizontale Befestigung des Pulsatorschlauchs 104 am Sammelstück 103 treten dadurch im Gegensatz zu einer herkömmlichen Anlage Pendelbewegungen des Euters auf. Es ergibt sich somit eine mechanische Stimulation mit einer großen horizontalen Komponente, die zur besseren Stimulation des Tieres führt.

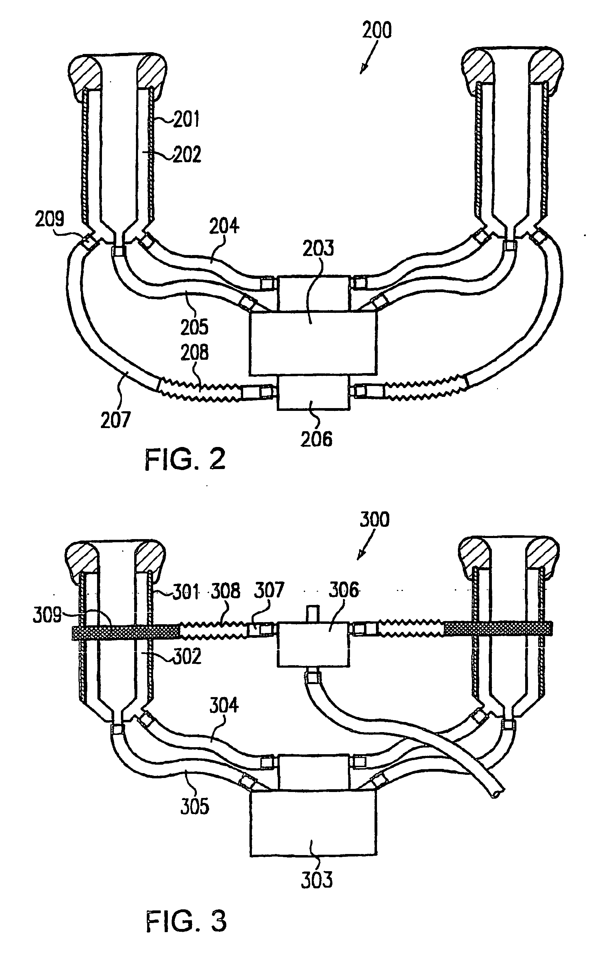

Fig. 2 zeigt eine schematische Querschnittsansicht eines Teils eines Melkgeschirrs 200 einer automatischen Melkanlage (nicht gezeigt), wobei der Einfachheit halber lediglich zwei Melkbecher 201 dargestellt sind. In der Zeichnung ist lediglich nur eine Hälfte mit Bezugszeichen belegt, da die beiden Melkbecher mit zugehörigen Anschlüssen identisch aufgebaut sind. Der Melkbecher 201 ist in seinem Inneren mit einem flexiblen Zitzengummi 202 ausgestattet. Femer ist der Zwischenraum zwischen dem Melkbecher 201 und dem Zitzengummi 202 mittels einer flexiblen Fluidleitung 204 mit einem Sammelstück 203 verbunden. Der Innenraum des Zitzengummis 202 ist mit einem flexiblen Milchschlauch 205 ebenfalls mit dem Sammelstück 203 verbunden. Ferner ist eine Stimulationsvorrichtung vorgesehen, die in dem dargestellten Beispiel aus einem an dem Sammelstück 203 befestigten Ventilelement 206, einer flexiblen Fluidleitung 207 mit einem längenvariablen Bereich 208 und einem Befestigungsstutzen 209 besteht. Ferner ist eine Vakuumvorrichtung vorgesehen (nicht gezeigt), die mit dem Sammelstück 203 in Fluidverbindung steht.

Im Betrieb wird der Melkbecher 201 mit dem Zitzengummi 202 über die Zitze eines zu melkenden Tieres geschoben und mittels eines Unterdrucks, der von der Vakuumvorrichtung erzeugt und über das Sammelstück 203 und die Fluidverbindung 205 an die Zitze übertragen wird, an dieser festgehalten. Typischerweise umfasst die Vakuumvorrichtung eine sogenannte Pulsatoreinrichtung, die beim Melken periodisch den Zwischenraum zwischen dem Melkbecher 201 und dem Zitzengummi 202 über die Fluidleitung 204 mit Unterdruck und Atmosphärendruck beschickt, um periodisch durch Einfalten des Zitzengummis 202 die Zitze strömungsmäßig von dem Milchschlauch 205 abzutrennen. Im Gegensatz zu konventionellen Melkanlagen, in denen häufig eine Stimulation des Euters dadurch erreicht wird, dass der Pulsatorschlauch 204 einen längenvariablen Bereich umfasst, und dieser sich periodisch entsprechend einer von dem Pulsator vorgegebenen Frequenz zusammenzieht, wodurch eine gewisse mechanische Stimulation auf die Zitze entsprechend der Pulsatorfrequenz ausgeübt wird, erlaubt demgegenüber die erfindungsgemäße steuerbare Stimulationsvorrichtung mittels des steuerbaren Ventilelements 206, das in dem gezeigten Beispiel mit zwei Melkbechern über die Leitung 207 verbunden ist, und die des Weiteren mit der Vakuumvorrichtung (nicht gezeigt) oder einer zusätzlichen Einrichtung, die in der Lage ist, Unterdruck oder Überdruck bereitzustellen, verbunden ist, ein gesteuertes Stimulieren. Das Ventilelement 206 kann dabei steuerbar sein, etwa durch von außen zugeführte Signale oder durch intem erzeugte Signale, um in einem durch die Steuersignale vorgegebenen Frequenzbereich Druckschwankungen in der Leitung 207, die zu entsprechenden Längenänderung im längenvariablen Bereich 208 führen, erzeugen. Dies führt dann zu den gewünschten Stimulationsreizen an der Zitze des Tieres.

In einer illustrativen Ausführungsform ist das Ventilelement 206 als ein elektrisch betätigbares Ventilelement ausgebildet, das eine Verbindung zur Atmosphäre aufweist und somit steuerbar Druckschwankungen in der Fluidverbindung 207 erzeugt. Vorteilhafterweise ist das Ventilelement 206 als Proportionalventil ausgebildet, so dass zusätzlich zu der Frequenz der Druckschwankungen ebenfalls deren Intensität steuerbar ist. Mit handelsüblichen Proportionalventilen, die eine Ansprechzeit von etwa 50 bis 200 msec aufweisen, lassen sich damit Stimulationsreize bis ca. 20 Hz erzeugen. In der in Fig. 1 dargestellten Ausführungsform ist das Ventilelement 206 an dem Sammelstück 203 befestigt, um somit aufgrund der relativ großen Masse des Sammelstücks 203 entsprechend effizient mechanische Stimulationsreize zu erzeugen. Um die Wirkung der mechanischen Stimulationsreize zu variieren, kann femer ein zusätzliches Gewicht, beispielsweise eine Flüssigkeitsbehälter, vorgesehen werden.

In einer weiteren nichtgezeigten Ausführungsform, kann anstelle der Fluidverbindung 207 ein Zwei-Kammer-Pulsatorschlauch 204 vorgesehen werden, dessen äußere Kammer mit dem Ventilelement 206 verbunden ist, wobei der Zwei-Kammer-Pulsatorschlauch einen längenvariablen sich auf Druckunterschiede in der äußeren Kammer reagierenden Bereich umfasst. Ferner ist in der in Fig. 1 dargestellten Ausführungsform ein Befestigungsstutzen 209 an dem Melkbecher 201 vorgesehen, um die Längenkontraktion des Bereichs 208 auf den Melkbecher zu übertragen. Es kann jedoch eine beliebige Art der Befestigung der Fluidverbindung 207 vorgesehen werden. Zum Beispiel kann der Endbereich der Fluidverbindung 207 an einem der Anschlussstutzen für den Milchschlauch 205 oder den Pulsatorschlauch 204 befestigt werden.

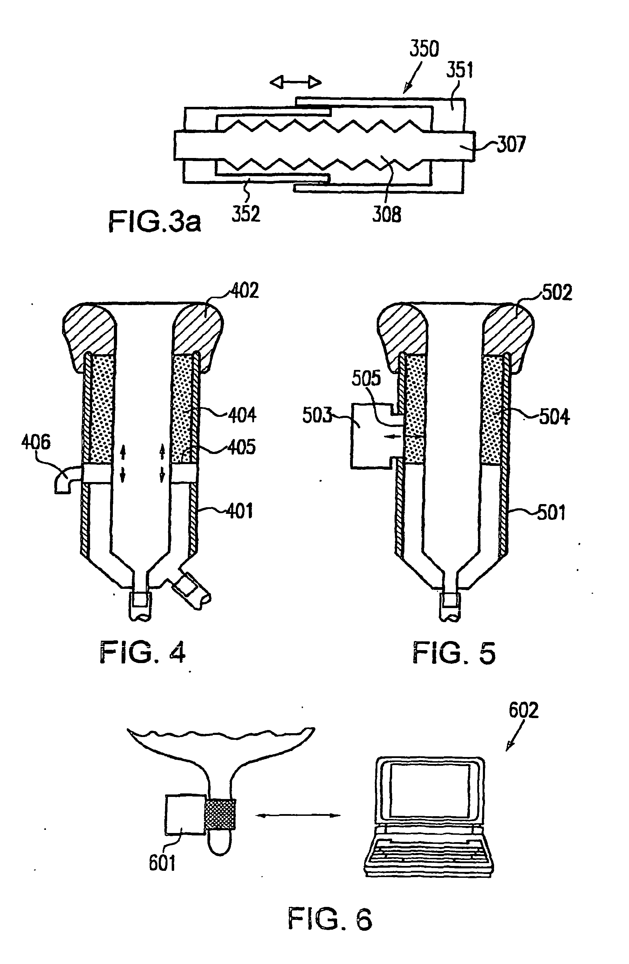

Fig. 3 zeigt schematisch eine Variation der in Fig. 2 dargestellten Ausführungsform. Gleiche oder ähnliche Elemente wie in Fig. 2 sind in Fig. 3 mit den gleichen Bezugszahlen mit Ausnahme einer führenden 3 anstelle einer führenden 2 versehen. In dieser Ausführungsform umfasst eine erfindungsgemäße steuerbare Stimulationsvorrichtung ein Schwingungserzeugungselement 306, ein flexibles Verbindungselement 307 mit einem längenvariablen Bereich 308 sowie einen Befestigungsbereich 309. In der dargestellten Ausführungsform ist das Schwingungselement 306 ein Ventilelement, das beispielsweise mit der Vakuumvorrichtung (nicht gezeigt) in Fluidverbindung steht. Die flexiblen Verbindungselemente 307 sind dann als Fluidverbindungsleitungen ausgeführt. Durch steuerbare Druckschwankungen werden entsprechende mechanische Schwingungen an den beiden Melkbechem, an denen die Fluidverbindungen 307 befestigt sind, erzeugt.

Anstelle des Ventilelements 306 kann ein elektromagnetischer Wandler, ein piezoelektrischer Wandler, ein pneumatisches Schwingungselement und dergleichen verwendet werden. Mittels der elastischen Verbindungselemente 307, die insbesondere bei Verwendung von elektromagnetischen und/oder piezoelektrischen Wandlem als massive elastische Verbindungselemente ausgestaltet sind, lassen sich dann vergleichsweise hohe Frequenzen bzw. Vibrationen auf die Zitzen des Tieres übertragen. Durch die erfindungsgemäße Stimulationsvorrichtung lässt sich dabei die Frequenz und/oder die Amplitude der erzeugten mechanischen Reize variieren, Insbesondere wird beispielsweise bei relativ großen Längenänderungen eine Bewegung der Zitzenbecher 302 erreicht, die eine relativ große horizontale Komponente aufweist.

Ferner ist es durch die erfindungsgemäße Stimulationsvorrichtung in einfacher Weise möglich, zunächst eine pendelnde Bewegung der Melkbecher und damit des Sammelstücks 303, ähnlich wie in einer konventionellen Anlage einzustellen, wobei die Frequenz unabhängig von der Pulsatorfrequenz ist, und zusätzlich eine höherfrequente Stimulation der Pendelbewegung zu überlagem. Die einfache Art der Befestigung beispielsweise an den Melkbechern, wie in der Figur dargestellt, oder an anderen geeigneten Stellen, etwa den Anschlussstutzen für den Milchschlauch 305 oder den Pulsatorschlauch 304, ist unter anderem insbesondere vorteilhaft, wenn eine bereits bestehende Anlage nachgerüstet werden soll. Wenn ein elektromagnetischer Wandler und/oder ein piezoelektrischer Wandler als Schwingungselement 306 verwendet werden, kann beispielsweise eine Stromversorgung, etwa ein Akku in das Schwingungselement 306 integriert werden, so dass keine zusätzlichen Leitungen für die Stimulationsvorrichtung notwendig sind. Das Schwingungselement 306 kann dabei entsprechende Schalterelemente oder andere Stellelemente aufweisen, um die Frequenz und/oder Amplitude der erzeugten mechanischen Schwingungen einzustellen. Femer kann das Schwingungselement 306 einen Zeitgeber umfassen, um nach Ablauf einer gewissen Zeit eine bestimmte Art der Stimulation durchzuführen. So kann beispielsweise eine für die Vorstimulation vor dem eigentlichen Melkvorgang erforderliche Zeitspanne in einfacher Weise eingehalten werden, und der Ablauf beispielsweise einer einminütigen Vorstimulation kann dabei akustisch oder optisch angezeigt werden.

Bei einer automatischen Melkanlage, in der kein Sammelstück (103, 203, 303) vorgesehen ist, kann ein geeignet geformtes Gewicht, das mit den entsprechenden Fluidleitungen gekoppelt ist, vorgesehen werden, um die pendelnde Bewegung des Melkgeschirrs zu erhalten bzw. zu verstärken.

In einer bevorzugten Ausführungsform umfasst die Melkanlage eine Kontrolleinheit, die mit der Stimulationsvorrichtung in Verbindung ist Auf diese Weise lassen sich individuell unterschiedlich auf das einzelne Tier angepasste Stimulationsprogramme ausführen. Femer kann der Bediener aus einer Reihe von im Voraus festgelegter Stimulationsprogramme auswählen, um ein optimales Melkergebnis zu erhalten.

In einer weiteren vorteilhaften Ausführungsform umfasst die Melkanlage Sensoren für beispielsweise Temperatur und/oder Milchdurchfluss, und dergleichen, so dass die Kontrolleinheit in Abhängigkeit von den ausgewerteten Sensorsignalen eine entsprechende Dauer und/oder Intensität und/oder Frequenz eines Stimulationsreizes auswählen kann. So kann beispielsweise durch einen Milchdurchflussmesser sowohl die aktuelle Durchflussrate wie auch die bereits ermolkene Milchmenge festgestellt werden, und in Abhängigkeit von den Messergebnissen kann die Stimulation entsprechend angepasst werden. Beispielsweise kann bei reduziertem Milchdurchfluss und entsprechend langer Melkdauer oder entsprechend großer Menge bereits ermolkener Milch die Art der Stimulation in dieser Nachmelkphase deutlich zu der Stimulation während des eigentlichen Melkvorgangs geändert werden. Vorteilhaft ist es auch, entsprechende Ergebnisse und Stimulationsarten für die einzelnen Tiere über einen längeren Zeitraum hinweg aufzuzeichnen, so dass optimale Stimulationsparameter für das entsprechende Tier ausgewählt werden können. Vorzugsweise ist die Kontrolleinheit daher mit einer Speichereinrichtung und einer entsprechenden Rechnereinheit versehen, um etwaige Sensorsignale auszuwerten und aufzuzeichnen, und entsprechende Stimulationsparameter auszuwählen. Die Kontrolleinheit kann dabei als Mikroprozessor in dem Schwingungselement 306 oder als exteme Recheneinheit vorgesehen sein, wobei ein Datenaustausch über eine entsprechende Schnittstelle stattfinden kann. Vorzugsweise erfolgt dabei der Datenaustausch drahtlos, beispielsweise durch optische, akustische oder elektromagnetische Signale, um zusätzliche Leitungen zu vermeiden.

In einer weiteren nichtgezeigten Ausführungsform umfasst die erfindungsgemäße Stimulationsvorrichtung eine Heizeinrichtung, die so ausgestaltet ist, dass der Innenraum des Zitzengummis auf Temperaturen im Bereich von 30 bis 40°C erwärmbar ist. Das Beheizen des Zitzengummis kann dabei durch entsprechende elektrische Heizelemente am Melkbecher und/oder durch Fluidströmungskanäle, durch die ein temperiertes Fluid, beispielsweise warmes Wasser, geleitet wird, ausgebildet sein. Vorteilhaft dabei ist es, einen Temperatursensor vorzusehen, um mittels einer geeigneten Regelung die Temperatur auf einen gewünschten Wert einzustellen. Die erfindungsgemäße Heizeinrichtung erlaubt es insbesondere eine zusätzliche Stimulation auf das Tier auszuüben, da die Temperaturverhältnisse an der Zitze, die beim Saugen eines Kalbes auftreten, sehr genau nachgebildet werden können.

Fig. 3a zeigt schematisch ein Mittel zur mechanischen Verstärkung des flexiblen längenvariablen Bereichs 308 (108, 208 für die in den Fig. 1 und 2 beschriebenen Ausführungsformen). Ein Verstärkungsmittel 350 weist ein Außenteil 351 und einen Innenteil 352 auf, wobei das Außenteil 351 teilweise das Innenteil 352 umgibt und über diesen in der Längsrichtung verschiebbar ist, wie dies durch den Pfeil gekennzeichnet ist. Der Außenteil 351 und der Innenteil 352 sind jeweils mit einem Ende an dem flexiblen Element 307 (207, 104) verbunden und umschließen zumindest teilweise den flexiblen längenvariablen Bereich 308 (208, 108). Das Verstärkungsmittel ist aus einem relativ harten Material, beispielsweise harter Kunststoff, Metall, einer Verbindung aus verschiedenen Materialien, zweier oder mehrerer Materiatschichten, beispielsweise Kunststoff mit einem Metallgeflecht, oder dergleichen hergestellt. Der Innenteil 352 und der Außenteil 351 können jeweils mit beispielsweise einer Schlauchklemme am Element 307 (207, 104) befestigt sein, so dass die Verbindung wieder lösbar ist, oder das Verstärkungsmittel 350 kann dauerhaft mit dem Element 307 (207, 104) verbunden sein.

Durch die mechanische Verstärkung wird der besonders empfindliche Bereich 308 (208, 108) wirkungsvoll vor Beschädigung (z.B. Trittbeschädigung durch das Tier) geschützt. Das Verstärkungsmittel 350 kann auch mit einer Krümmung versehen sein, so dass eine gezielte Anpassung an die jeweiligen Verhältnisse der entsprechenden Elemente erfolgen kann. Ferner ist die in Fig. 3a dargestellte "teleskopartige" Struktur nur als eine beispielhafte Ausführungsformen aufzufassen, wobei diverse Änderungen durchgeführt werden können. Das Verstärkungsmittel muss den Bereich 308 (208, 108) radial nicht vollständig umschließen. Es können ein oder mehrere Längsschlitze vorgesehen sein, so dass der Bereich 308 (208, 108) visuell begutachtbar ist. Femer können mehr als zwei "Teleskopelemente" vorgesehen werden. Es kann ein Anschlag am Verstärkungsmittel 350 vorgesehen werden, so dass die Längsbewegung entsprechend beschränkt ist Der Anschlag kann verstellbar sein, so dass nach Bedarf eine maximale Längenänderung des Bereichs 308 (208, 108) einstellbar ist.

Fig. 4 zeigt einen schematischen Querschnitt eines Melkbechers 401 mit einem Zitzengummi 402, wobei ein Zwischenbereich 404 zwischen dem Zitzengummi 402 und dem Melkbecher 401 mit einer verformbaren Masse gefüllt ist Der Zwischenbereich 404 ist mittels einer Membran 405 mit einem Kopplungsbereich 307 verbunden. Ferner ist der Kopplungsbereich 307 mittels eines Anschlussstutzens 406 mit der Außenseite verbunden.

Im Betrieb kann mittels des Anschlussstutzens 306 der Kopplungsbereich 307 mit Druckschwankungen geeigneter Intensität und Frequenz beaufschlagt werden, die über die Membran 405 an die verformbare Masse 404 weitergeleitet werden. Durch die übertragenen Druckschwankungen ergibt sich eine für das Tier angenehme massierende Wirkung auf die Zitze und somit ein erhöhter Stimulationsreiz. Als verformbare Masse können dabei vorteilhafterweise ein Gel, ein Wasset-Ölmischung, kleine Materiatstückchen im Bereich von 0,5 mm bis 5 mm oder in einer Lösung verteilte Materialstückchen oder Kügelchen, und dergleichen verwendet werden. Ferner ist es auch möglich, keinen Anschluss 406 vorzusehen, da durch die ohnehin auftretenden Druckschwankungen, die durch den Pulsator erzeugt werden, eine unter Umständen bereits ausreichende massierende Wirkung erzielt wird. Femer besteht die Möglichkeit, den Kopplungsbereich 307 mit Überdruck zu beaufschlagen, so dass ein lokales Stimulieren der Zitze mittels Druck auf die Zitze ermöglicht wird.

In einer weiteren Variante sind mehrere Kopplungsbereiche 307 vorgesehen, so dass sich lokal eine intensivere Wirkung eines angelegten Überdrucks und/oder von Druckschwankungen an der Zitze erreichen lässt. Des Weiteren kann die Membran 405 als ein Element mit gitterähnlicher Struktur ausgebildet sein, wenn die verformbare Masse im Zwischenbereich 404 als kleine Materiatstücke vorgesehen ist, um somit durch Zuführen und Abführen eines Fluids entsprechende Massagereize auf die Zitze auszuüben. Dabei können vorteilhafterweise ein oder mehrere zusätzliche Anschlüsse 406 mit entsprechenden Membranen 405 vorgesehen sein, um wirkungsvoll ein Fluid, beispielsweise Wasser, durch den Zwischenbereich 404 durchzuleiten und eine entsprechende massierende Wirkung auf die Zitze auszuüben.

In einer weiteren bevorzugten Ausführungsform ist der Zitzengummi 402 und der Zwischenbereich 404 mit der Membrane 405 und dem Kopplungsbereich 307 als ein Stück ausgebildet, wobei vorteilhafterweise die verformbare Masse beim Herstellungsprozess miteingefüllt wird. Alternativ kann ein zusätzlicher Anschluss in Zwischenbereich 404 vorgesehen werden, um die verformbare Masse nachträglich aufzufüllen oder gegebenenfalls austauschen zu können.

In Fig. 5 ist schematisch eine weitere Ausführungsform eines Melkbechers 501 mit einem Zwischenbereich 504, der zwischen dem Melkbecher 501 und einem Zitzengummi 502 vorgesehen und mit einer verformbaren Masse gefüllt ist, dargestellt. An einer seitlichen Öffnung des Melkbechers 501 ist eine Membran 505 vorgesehen, die mit einem Schwingungselement 503 gekoppelt ist. Als Schwingungselement 503 eignet sich in besonderem Maße ein elektromagnetischer und/oder piezoelektrischer Wandler, so dass Schwingungen mit beliebiger Frequenz und Amplitude auf die verformbare Masse übertragen werden können. Dabei können vorteilhafterweise der Zitzengummi 502 und der Melkbecher 501 so gestaltet sein, dass beide zur besseren Reinigung voneinander lösbar sind, wie dies in herkömmlichen Anlagen der Fall ist. Femer ist es von Vorteil, dass das Schwingungselement 503 lösbar an einer entsprechenden Öffnung des Melkbechers 501 befestigt ist, so dass das Schwingungselement 503 bei Bedarf rasch entfernt oder befestigt werden kann.

Fig. 6 zeigt schematisch ein System zur Stimulation eines Tieres, wobei eine mobile Stimulationsvorrichtung 601 mit einer Rechnereinheit 602 in Verbindung steht. Das erfindungsgemäße Stimulationssystem ist insbesondere vorteilhaft, wenn eine große Anzahl von Tieren zu melken ist, da die mobile Stimulationsvorrichtung 601 zu einem beliebigen Zeitpunkt an dem Tier befestigt werden kann, beispielsweise nach einem Melkvorgang, so dass in zeitlich abgestufter Weise vor einem nächsten Melkvorgang die Recheneinheit 602 entsprechende Signale aussenden kann, so dass die mobile Stimulationsvorrichtung 601 entsprechende Stimulationsreize erzeugt. Die Rechnereinheit 602 sendet dafür selektiv entsprechende Signale aus, beispielsweise optische, akustische oder elektromagnetische Signale, um damit gezielt ein bzw. eine Gruppe von vier mobilen Stimulationsvorrichtungen 601 zu aktivieren. Die mobile Stimulationsvorrichtung 601 umfasst vorteilhafterweise ein elektromagnetisches und/oder piezoelektrisches Schwingungselement sowie ein Befestigungsmittel, etwa ein weiches elastisches Band, so dass die mobile Stimulationsvorrichtung 601 schnell angelegt und abgenommen werden und über einen längeren Zeitraum hinweg von dem Tier ohne nachteilige Wirkungen getragen werden kann. Vorteilhafterweise sind die mobile Stimulationsvorrichtung und die Melkbecher so gestaltet, dass beim Anlegen der Melkbecher die Stimulationsvorrichtung schnell und einfach am Melkbecher befestigt werden kann, beispielsweise mittels Klettverschluss oder dergleichen, so dass gegebenenfalls über eine entsprechende Öffnung im Melkbecher die Zitze weiterhin effizient von der mobilen Stimulationsvorrichtung stimuliert werden kann. Ferner kann die mobile Stimulationsvorrichtung auch unabhängig von der Rechnereinheit 602 verwendet werden. Dazu wird vorzugsweise ein einstellbarer Zeitgeber in der mobilen Stimulationsvorrichtung vorgesehen, der zeitgenau Stimulationsreize der Stimulationsvorrichtung auslöst

In einer weiteren Ausführungsform (nicht gezeigt), die vorteilhafterweise mit allen zuvor beschriebenen Ausführungsformen kombiniert wird, ist eine Stimulationseinrichtung zur optischen und/oder akustischen Stimulation vorgesehen. Dabei kann für jedes Tier individuell oder für eine Gruppe von Tieren ein visueller und/oder akustischer Reiz ausgeübt werden. So kann eine Lautsprecheranlage vorgesehen sein, die in steuerbarer Weise akustische Reize abgibt. Dabei kann, um natürliche Verhältnisse zu simulieren, ein gespeichertes Geräuschbild eines Kalbes als Reiz abgegeben werden. Des weiteren können zusätzlich oder stattdessen diverse Klänge erzeugt werden. Vorteilhafterweise wird die Steuerung von einer geeigneten Kontrolleinheit ausgeführt, die die akustische Reizausgabe in Übereinstimmung mit Steuerungsparameter, wie z.B. Tageszeit, Dauer bzw. Phase des Melkvorgangs, etc., steuert. Gleiches gilt für die Abgabe optischer Reize, die in Form von angepasster Beleuchtungsfarbe und Intensität bis hin zu komplexen Reizen (Landschaftsbilder, bewegte Bilder, etc.), die beispielsweise durch Bildwiedergabegeräte erzeugt werden, reichen können. Ferner kann das Zuführen von akustischen und/oder optischen Reizen zu einzelnen Tieren durch das Vorsehen von geeigneten Kopfabdeckungen erreicht werden. Insbesondere die akustische Stimulation, beispielsweise das Rufen eines Jungtieres, kann vorteilhafter Weise dazu verwendet werden, das zu melkende Tier zum Ort des Melkens zu locken. Dieses Verfahren ist besonders in Verbindung mit sogenannten Melkrobotern vorteilhaft, da dort die Tiere den Weg zum Melkroboter selbständig finden müssen. Ferner kann durch das Anlocken ein gewisser zeitlicher Rahmen für den Melkvorgang vorgegeben werden.

Obwohl zuvor einzelne Ausführungsformen beispielhaft anhand der schematischen Zeichnungen beschrieben wurden, ist darauf hinzuweisen, dass die diversen Ausführungsformen untereinander kombinierbar sind. Insbesondere kann die mit Bezug zu Fig. 1 erläuterte Ausführungsform mit allen Merkmalen der nachfolgenden Ausführungsformen kombiniert werden. Ferner können durch ein übergeordnetes Kontrollsystem die einzelnen Stimulationsvorrichtungen in koordinierter und geregelter Weise eingesetzt werden. Dies gilt insbesondere, wenn zusätzlich zu den physisch ausgeübten Stimulationsreizen auch akustische, optische oder andere sensorische Reize zu einer umfassenden Stimulation des Tieres verwendet werden.

## Patentansprüche

1. Automatische Melkvorrichtung mit mehreren Melkbechern, einer einen zum Abmelken erforderlichen Unterdruck erzeugenden Vakuumvorrichtung, einer Pulsatoreinrichtung und einer Stimulationsvorrichtung, die eine Schwingungserzeugungseinrichtung umfasst, die mit einem oder mehreren Melkbechem mechanisch koppelbar ist während des Melkvorgangs und die so ausgebildet ist, dass sie unabhängig von der Pulsatoreinrichtung steuerbar ist, **dadurch gekennzeichnet, daß** die Schwingungserzeugungseinrichtung mittels Fluidverbindungsleitungen mit dem einen oder mehreren Melkbechern koppelbar ist.

2. Die automatische Melkvorrichtung nach Anspruch 1, **dadurch gekennzeichnet, dass** die steuerbare Stimulationsvorrichtung in Frequenz und/oder Amplitude steuerbare Stimulationsreize erzeugen kann.

3. Die automatische Melkvorrichtung nach Anspruch 1 oder 2, **dadurch gekennzeichnet, dass** die steuerbare Stimulationsvorrichtung eine flexible, teilweise längenvariable Fluidverbindung zwischen der Vakuumvorrichtung und jeweils den Melkbechem und ein steuerbares Ventilelement aufweist, so dass bei Ansteuerung des Ventilelements eine Längenänderung durch Druckveränderung in der längenvariablen Fluidverbindung erfolgt.

4. Die automatische Melkvorrichtung nach Anspruch 3, **dadurch gekennzeichnet, dass** das steuerbare Ventilelement ein elektromagnetisches Ventilelement ist.

5. Die automatische Melkvorrichtung nach Anspruch 3, **dadurch gekennzeichnet, dass** das steuerbare Ventilelement ein pneumatisches Ventilelement ist.

6. Die automatische Melkvorrichtung nach einem der Ansprüche 3 bis 5, **dadurch gekennzeichnet, dass** das steuerbare Ventilelement, zumindest bereichsweise, kontinuierlich steuerbar ist, so dass die Frequenz und/oder die Größe der Längenänderung zumindest bereichsweise, kontinuierlich einstellbar ist.

7. Die automatische Melkvorrichtung nach Anspruch 1 oder 2, **dadurch gekennzeichnet, dass** die steuerbare Einrichtung eine mittels Druckänderung längenveränderbare Fluidverbindung zwischen zwei oder mehreren der Melkbecher sowie ein steuerbares Ventilelement umfasst, wobei ein Anschluss des Ventilelements zur Verbindung mit einer Pumpenvorrichtung und/oder der Vakuumvorrichtung vorgesehen ist.

8. Die automatische Melkvorrichtung nach einem der Ansprüche 1 bis 7, **dadurch gekennzeichnet, dass** jeder Melkbecher einen Zitzengummi aufweist, wobei der Zitzengummi so gestaltet ist, dass er mit der steuerbaren Einrichtung koppelbar ist und mechanische Schwingungen auf die Zitze übertragen kann.

9. Die automatische Melkvorrichtung nach Anspruch 8, **dadurch gekennzeichnet, dass** der Zitzengummi einen Zwischenbereich zwischen der inneren, teilweise mit der Zitze in Kontakt kommenden Oberfläche und der inneren Oberfläche des Melkbechers aufweist, wobei der Zwischenbereich mit einer verformbaren Masse, zumindest teilweise, gefüllt ist.

10. Die automatische Melkvorrichtung nach Anspruch 9, **dadurch gekennzeichnet, dass** die verformbare Masse eine Mischung aus Öl und Wasser und/oder Materialstückchen mit einer Abmessung im Bereich von ca. 0,5 mm bis ungefähr 5 mm umfasst.

11. Die automatische Melkvorrichtung nach Anspruch 9 oder 10, **dadurch gekennzeichnet, dass** der Zwischenbereich einen durch eine Membran nach innen abgeschlossenen Fluidanschluss aufweist.

12. Die automatische Melkvorrichtung nach Anspruch 11, **dadurch gekennzeichnet, dass** die Membran undurchlässig und elastisch ist, so dass anschlussseitige Druckschwankungen auf die verformbare Masse übertragen werden.

13. Die automatische Melkvorrichtung nach Anspruch 11, **dadurch gekennzeichnet, dass** die Membran eine Maschenstruktur mit einer Maschengröße aufweist, die kleiner als 0,5 mm ist.

14. Die automatische Melkvorrichtung nach einem der Ansprüche 11 bis 13, **dadurch gekennzeichnet, dass** der Zitzengummi, der Zwischenbereich, die Membran und der Fluidanschluss in integraler Weise hergestellt sind.

15. Die automatische Melkvorrichtung nach Anspruch 9, **dadurch gekennzeichnet, dass** der Zwischenbereich einen oder mehrere Abschnitte aufweist, der bzw. die durch Einführen eines Fluids im Volumen veränderbar sind.

16. Die automatische Melkvorrichtung nach einem der Ansprüche 1 bis 15, **dadurch gekennzeichnet, dass** die Stimulationsvorrichtung ferner eine Heizeinrichtung umfasst, die ausgebildet ist, Temperaturen im Bereich von 20°C bis 45°C am Zitzengummi zu erzeugen.

17. Die automatische Melkvorrichtung nach Anspruch 16, **dadurch gekennzeichnet, dass** die Heizeinrichtung ein elektrisches Heizelement umfasst.

18. Die automatische Melkvorrichtung nach Anspruch 16 oder 17, **dadurch gekennzeichnet, dass** ein temperiertes Fluid zum Heizen verwendbar ist.

19. Die automatische Melkvorrichtung nach einem der Ansprüche 1 bis 18, **dadurch gekennzeichnet, dass** eine Kontrolleinheit vorgesehen ist, die die Stimulationsvorrichtung entsprechend einem in der Kontrolleinheit implementierten Funktionsablauf steuert.

20. Die automatische Melkvorrichtung nach Anspruch 19, **dadurch gekennzeichnet, dass** ein Zeitgeber vorgesehen ist, so dass die Kontrolleinheit die Stimulationsvorrichtung in Abhängigkeit von der Melkdauer steuern kann.

21. Die automatische Melkvorrichtung nach Anspruch 19 oder 20, **dadurch gekennzeichnet, dass** ein Milchflusssensor vorgesehen ist, so dass die Kontrolleinheit die Stimulationsvorrichtung in Abhängigkeit von der bereits gemolkenen Milchmenge und/oder dem aktuellen Milchdurchfluss steuern kann.

22. Die automatische Melkvorrichtung nach einem der Ansprüche 1 bis 21, **dadurch gekennzeichnet, dass** ein Temperatursensor und ein Regelkreis vorgesehen sind, so dass die Temperatur im Melkbecher regelbar ist.

23. Die automatische Melkvorrichtung nach Anspruch 22, **dadurch gekennzeichnet, dass** der Regelkreis mit der Kontrolleinheit verbunden ist, so dass die Stimulationsvorrichtung und die Temperatur in wechselseitiger Abhängigkeit steuerbar sind.

24. Die automatische Melkvorrichtung nach Anspruch 19, **dadurch gekennzeichnet, dass** die Kontrolleinheit einen Dateneingabebereich umfasst, über den manuell und/oder maschinell Daten, insbesondere das zu melkende Tier betreffende Daten, eingegeben werden können.

25. Die automatische Melkvorrichtung nach Anspruch 19, **dadurch gekennzeichnet, dass** die Kontrolleinheit einen Speicherbereich umfasst, indem den Melkvorgang betreffenden Daten und insbesondere die Stimulation betreffende Parameter speicherbar sind.

26. Die automatische Melkvorrichtung nach einem der Ansprüche 1 bis 25, wobei die Stimulationsvorrichtung eine Stimulationseinrichtung zur optischen und/oder akustischen Stimulation aufweist.

27. Die automatische Melkvorrichtung nach Anspruch 26, **dadurch gekennzeichnet, dass** die optisch/akustische Stimulationseinrichtung eine Kopfabdeckung mit integrierter Lautsprechereinrichtung umfasst.

28. Die automatische Melkvorrichtung nach Anspruch 26 oder 27, **dadurch gekennzeichnet, dass** die optisch/akustische Stimulationseinrichtung so ausgestaltet ist, um Licht einstellbarer Farbe zu erzeugen.

## Claims

1. An automatic milking device with a plurality of milking cups, a vacuum device generating a negative pressure required for milking, a pulsator system, and a stimulation device comprising a vibration generating system which is adapted to be mechanically coupled to one or a plurality of milking cups during the milking operation and is configured to be controllable independently of the pulsator system **characterized in that** the vibration generating system is adapted to be coupled to the one or plurality of milking cups by means of fluid connecting lines.

2. The automatic milking device according to claim 1, **characterized in that** the controllable stimulation device is capable of generating stimuli the frequency and/or amplitude of which are controllable.

3. The automatic milking device according to claim 1 or 2, **characterized in that** the controllable stimulation device has a flexible fluid connecting line, the length of which is in parts variable and which is provided between the vacuum device and a respective one of the milking cups, and a controllable valve element so that, upon activation of the valve element, the length is varied as a result of a change in pressure in the variable length fluid connecting line.

4. The automatic milking device according to claim 3, **characterized in that** the controllable valve element is an electromagnetic valve element.

5. The automatic milking device according to claim 3, **characterized in that** the controllable valve element is a pneumatic valve element.

6. The automatic milking device according to one of the claims 3 through 5, **characterized in that** the controllable valve element is continuously controllable, at least in some areas thereof, so that the frequency and/or the extent of the change in length is continuously adjustable, at least in some areas thereof.

7. The automatic milking device according to claim 1 or 2, **characterized in that** the controllable system comprises a fluid connecting line, the length of which is variable by varying the pressure and which is provided between two or a plurality of milking cups, and a controllable valve element, a connection being providing for connecting the valve element to a pumping device and/or the vacuum device.

8. The automatic milking device according to one of the claims 1 through 7, **characterized in that** each milking cup comprises a teat rubber liner, said teat rubber liner being configured in such a manner that it is adapted to be coupled to the controllable system and is capable of transmitting mechanical vibrations to the teat.

9. The automatic milking device according to claim 8, **characterized in that** the teat rubber liner is comprised of an intermediate region between the inner surface, which in parts comes into contact with the teat, and the inner surface of the milking cup, said intermediate region being filled, at least in parts, with a deformable mass.

10. The automatic milking device according to claim 9, **characterized in that** the deformable mass comprises a mixture of oil and water and/or small pieces of material the size of which ranges from about 0.5 mm to approximately 5 mm.

11. The automatic milking device according to claim 9 or 10, **characterized in that** the intermediate region comprises a fluid connection which is closed inward by a membrane.

12. The automatic milking device according to claim 11, **characterized in that** the membrane is impermeable and elastic so that pressure variations on the side of the connection are transmitted to the deformable mass.

13. The automatic milking device according to claim 11, **characterized in that** the membrane is a mesh structure having a mesh size of less than 0.5 mm.

14. The automatic milking device according to one of the claims 11 through 13, **characterized in that** the teat rubber liner, the intermediate region, the membrane and the fluid connection are integrally formed.

15. The automatic milking device according to claim 9, **characterized in that** the intermediate region comprises one or a plurality of sections the volume of which may be varied by introducing a fluid.

16. The automatic milking device according to one of the claims 1 through 15, **characterized in that** the stimulation device further comprises a heating system that is configured to generate temperatures ranging from 20°C to 45°C at the teat rubber liner.

17. The automatic milking device according to claim 16, **characterized in that** the heating system comprises an electric heating element.

18. The automatic milking device according to claim 16 or 17, **characterized in that** a temperature equalized fluid may be used for heating.

19. The automatic milking device according to one of the claims 1 through 18, **characterized in that** there is provided a control unit that controls the stimulation device in compliance with a functional sequence implemented in the control unit.

20. The automatic milking device according to claim 19, **characterized in that** there is provided a timer so that the control unit is capable of controlling the stimulation device as a function of the milking time.

21. The automatic milking device according to claim 19 or 20, **characterized in that** a milk flow sensor is provided so that the control unit is capable of controlling the stimulation device as a function of the quantities of milk already achieved and/or of the actual milk flow.

22. The automatic milking device according to one of the claims 1 through 21, **characterized in that** a temperature sensor and a control circuit are provided so that the temperature within the milking cup is regulatable.

23. The automatic milking device according to claim 22, **characterized in that** the control circuit is connected to the control unit so that the stimulation device and the temperature are interdependently controllable.

24. The automatic milking device according to claim 19, **characterized in that** the control unit comprises a data entry region through which data, more specifically data related to the animal to be milked, may be entered manually and/or by a machine.

25. The automatic milking device according to claim 19, **characterized in that** the control unit comprises a memory region in which data related to the milking process and more specifically parameters related to the stimulation may be stored.

26. The automatic milking device according to one of the claims 1 through 25, wherein stimulation device comprises a stimulation system for optical and/or acoustic stimulation.

27. The automatic milking device according to claim 26, **characterized in that** the optical/acoustic stimulation system comprises a head covering with an integrated loudspeaker system.

28. The system according to claim 26 or 27, **characterized in that** the optical/acoustic stimulation system is configured to generate light of adjustable color.

## Revendications

1. Machine à traire automatique comprenant plusieurs gobelets trayeurs, un système à vide créant un vide nécessaire pour tirer le lait, un système de pulsation et un système de stimulation, qui comprend un dispositif de production de vibrations qui peut être couplé mécaniquement à un ou plusieurs gobelets trayeurs pendant la traite et qui est conçu de manière à pouvoir être commandé indépendamment du système de pulsation **caractérisée en ce que** le dispositif de production de vibrations peut être couplé au moyen de lignes de fluide à un ou plusieurs gobelets trayeurs.

2. Machine à traire automatique selon la revendication 1, **caractérisée en ce que** le système de stimulation commandable peut produire des stimuli à fréquence et/ou à amplitude réglable.

3. Machine à traire automatique selon la revendication 1 ou 2, **caractérisée en ce que** le système de stimulation commandable présente une ligne de fluide flexible à longueur partiellement variable entre le système à vide et chacun des gobelets trayeurs et une valve commandable, de sorte que lors de l'activation de la valve, il se produit une modification de la longueur due à la modification de la pression dans la ligne de fluide à longueur variable.

4. Machine à traire automatique selon la revendication 3, **caractérisée en ce que** la valve commandable est une valve électromagnétique.

5. Machine à traire automatique selon la revendication 3, **caractérisée en ce que** la valve commandable est une valve pneumatique.

6. Machine à traire automatique selon l'une quelconque des revendications 3 à 5, **caractérisée en ce que** la valve commandable est commandable en continu au moins dans une zone, de sorte que la fréquence et/ou l'importance de la modification de la longueur peut être réglée en continu au moins dans une zone.

7. Machine à traire automatique selon la revendication 1 ou 2, **caractérisée en ce que** le dispositif commandable comprend ligne de fluide à longueur modifiable par modification de la pression entre deux gobelets trayeurs ou plus ainsi qu'une valve commandable, un raccord de la valve pour un couplage avec un système de pompage et/ou le système à vide étant prévu.

8. Machine à traire automatique selon l'une quelconque des revendications 1 à 7, **caractérisée en ce que** chaque gobelet trayeur présente un manchon trayeur, le manchon trayeur étant conçu de manière à pouvoir être couplé au dispositif commandable et à pouvoir transmettre des vibrations mécaniques au trayon.

9. Machine à traire automatique selon la revendication 8, **caractérisée en ce que** le manchon trayeur présente une zone intermédiaire entre la surface interne entrant partiellement en contact avec le trayon et la surface interne du gobelet trayeur, la zone intermédiaire étant au moins partiellement remplie d'une matière déformable.

10. Machine à traire automatique selon la revendication 9, **caractérisée en ce que** la matière déformable est un mélange d'huile et d'eau et/ou de particules de matière d'une taille allant d'environ 0,5 mm à environ 5 mm.

11. Machine à traire automatique selon la revendication 9 ou 10, **caractérisée en ce que** la zone intermédiaire présente un raccord de fluide isolé envers l'intérieur par une membrane.

12. Machine à traire automatique selon la revendication 11, **caractérisée en ce que** la membrane est imperméable et élastique, de sorte que des variations de pression sur le raccord sont transmises à la matière déformable.

13. Machine à traire automatique selon la revendication 11, **caractérisée en ce que** la membrane est une structure à mailles ayant une ouverture de maille inférieure à 0,5 mm.

14. Machine à traire automatique selon l'une quelconque des revendications 11 à 13, **caractérisée en ce que** le manchon trayeur, la zone intermédiaire, la membrane et le raccord de fluide sont fabriqués en une seule pièce.

15. Machine à traire automatique selon la revendication 9, **caractérisée en ce que** la zone intermédiaire présente une ou plusieurs sections dont le volume peut être modifié par l'introduction d'un fluide.

16. Machine à traire automatique selon l'une quelconque des revendications 1 à 15, **caractérisée en ce que** le système de stimulation présente en outre un dispositif de chauffage qui est conçu pour produire des températures de 20°C à 45°C sur le manchon trayeur.

17. Machine à traire automatique selon la revendication 16, **caractérisée en ce que** le dispositif de chauffage est un chauffage électrique.

18. Machine à traire automatique selon la revendication 16 ou 17, **caractérisée en ce qu'**un fluide chauffé peut être utilisé pour le chauffage.

19. Machine à traire automatique selon l'une quelconque des revendications 1 à 18, **caractérisée en ce qu'**une unité de commande, qui commande le système de stimulation selon un déroulement de fonctionnement implémenté dans l'unité de commande, est prévue.

20. Machine à traire automatique selon la revendication 19, **caractérisée en ce qu'**un temporisateur est prévu, de sorte que l'unité de commande peut commander le système de stimulation en fonction de la durée de la traite.

21. Machine à traire automatique selon la revendication 19 ou 20, **caractérisée en ce qu'**un capteur de flux de lait est prévu, de sorte que l'unité de commande peut commander le système de stimulation en fonction de la quantité de lait déjà tiré et/ou du débit de lait réel.

22. Machine à traire automatique selon l'une quelconque des revendications 1 à 21, **caractérisée en ce qu'**un capteur de température et un circuit de réglage sont prévus, de sorte que la température dans les gobelets trayeurs peut être réglée.

23. Machine à traire automatique selon la revendication 22, **caractérisée en ce que** le circuit de réglage est relié à l'unité de commande, de sorte que le système de stimulation et la température peuvent être commandés de manière interdépendante.

24. Machine à traire automatique selon la revendication 19, **caractérisée en ce que** l'unité de commande comprend une zone d'entrée de données, par l'intermédiaire de laquelle des données, en particulier des données concernant l'animal à traire, peuvent être entrées manuellement et/ou automatiquement.

25. Machine à traire automatique selon la revendication 19, **caractérisée en ce que** l'unité de commande comprend une zone de mémoire dans laquelle les données concernant la traite et en particulier les paramètres concernant la stimulation peuvent être mémorisés.

26. Machine à traire automatique selon l'une quelconque des revendications 1 à 25, dans laquelle le système de stimulation comprend un appareil de stimulation pour une stimulation optique et/ou acoustique.

27. Machine à traire automatique selon la revendication 26, **caractérisée en ce que** l'appareil de stimulation optique/acoustique comprend un casque avec des haut-parleurs intégrés.

28. Machine à traire automatique selon la revendication 26 ou 27, **caractérisée en ce que** l'appareil de stimulation optique/acoustique est conçu de manière à produire une lumière à couleur réglable.
